# EUROPEAN PATENT SPECIFICATION

(11) **EP 4 123 405 B1**
(45) Date of publication and mention of the grant of the patent: **03.09.2025**
(21) Application number: 22184192.7
(22) Date of filing: 11.07.2022
(51) Int. Cl.: G05D 1/00, A01B 69/04

(54) **TRAVEL CONTROL METHOD, TRAVEL CONTROL SYSTEM, AND TRAVEL CONTROL PROGRAM**
FAHRSTEUERUNGSVERFAHREN, FAHRSTEUERUNGSSYSTEM UND FAHRSTEUERUNGSPROGRAMM
PROCÉDÉ DE COMMANDE DE DÉPLACEMENT, SYSTÈME DE COMMANDE DE DÉPLACEMENT ET PROGRAMME DE COMMANDE DE DÉPLACEMENT

(30) Priority: 21.07.2021 JP 2021120795
(43) Date of publication of application: 25.01.2023
(73) Proprietor: Yanmar Holdings Co., Ltd., Osaka-shi, Osaka (JP)
(72) Inventor: IWAMURA, Keisuke, Okayama (JP)
(74) Representative: Novagraaf International SA

(56) References cited:
- EP-A1- 3 834 601
- US-A1- 2020 359 547
- US-A1- 2021 195 823

## Description

### TECHNICAL FIELD

The present invention relates to a travel control method, a travel control system, and a travel control program for causing a work vehicle to travel.

### BACKGROUND ART

Conventionally, work vehicles capable of automatic travel are known to automatically travel along a target route set in advance only when traveling straight ahead. For example, Patent Document 1 discloses a work vehicle including a correction means that corrects a target traveling direction when a gap occurs between an operator's intended direction and the direction recognized by the work vehicle when traveling straight ahead by automatic travel.

### PRIOR ART DOCUMENT

### PATENT DOCUMENT

Patent Document 1: Japanese Unexamined Patent Application Publication No. 2005-71142. Document EP3834601 relates to a harvester capable of manual traveling by manual operation and an automated traveling involving causing a machine body to follow a preset traveling route. Document US20210195823 relates to an agricultural field work vehicle capable of autonomous travel which agricultural field work vehicle travels along a plurality of work travel paths that are parallel to one another and that are connected to one another via turn travel paths. Document US20200359547 relates to a harvesting machine that enables automatic driving and manual driving, and to a travel mode switching method.

### SUMMARY OF INVENTION

### TECHNICAL PROBLEM

When the work vehicle is caused to travel while switching between manual travel and automatic travel, the operator performs an operation to switch from the manual travel to the automatic travel, for example. Here, for example, if the target route for the automatic travel is different from the operator's intended route, the operator will have to stop traveling and working on the work vehicle to re-generate the target route or to align the work vehicle. As described above, the conventional art causes a problem of low operability when causing the work vehicle to travel automatically.

An object of the present invention is to provide a travel control method, a travel control system, and a travel control program that can improve operability when causing a work vehicle to travel automatically.

### SOLUTION TO PROBLEM

The travel control method according to the present invention is a method of executing steps of causing a work vehicle to travel manually on the basis of a manual travel operation by an operator, generating a target route, which is a route for the work vehicle to travel automatically, when a first operation by the operator to a button of an operation unit is accepted while the work vehicle is traveling manually, and causing the work vehicle to travel automatically along the target route when a second operation by the operator to said button of the operation unit is accepted after the first operation.

The travel control system according to the present invention includes a first travel processing unit, a route-generation processing unit, and a second travel processing unit. The first travel processing unit causes the work vehicle to travel manually on the basis of the operator's manual travel operation. The route-generation processing unit generates a target route, which is a route for the work vehicle to travel automatically, when the operator's first operation to the button of the operation unit is accepted while the work vehicle is traveling manually. The second travel processing unit causes the work vehicle to travel automatically along the target route when the operator's second operation to said button of the operation unit is accepted after the first operation.

The travel control program according to the present invention is a program for causing one or a plurality of processors to execute steps of causing a work vehicle to travel manually on the basis of a manual travel operation by an operator, generating a target route, which is a route for the work vehicle to travel automatically, when a first operation by the operator to the button of the operation unit is accepted while the work vehicle is traveling manually, and causing the work vehicle to travel automatically along the target route when a second operation by the operator to said button of the operation unit is accepted after the first operation.

### ADVANTAGEOUS EFFECTS OF INVENTION

According to the present invention, a travel control method, a travel control system, and a travel control program which can improve operability when a work vehicle is caused to travel automatically can be provided.

### BRIEF DESCRIPTION OF DRAWINGS

FIG. 1 is a block diagram illustrating a configuration of a work vehicle according to an embodiment of the present invention.
FIG. 2 is an appearance view illustrating an example of the work vehicle according of the embodiment of the present invention.
FIG. 3 is an appearance view illustrating an example of an operating device according to the embodiment of the present invention.
FIG. 4 is a diagram illustrating an example of a target route of the work vehicle according to the embodiment of the present invention.
FIG. 5 is a diagram illustrating a travel method for automatic travel in the work vehicle according to the embodiment of the present invention.
FIG. 6 is a diagram illustrating the travel method of the automatic travel in the work vehicle according to the embodiment of the present invention.
FIG. 7A is a diagram illustrating an operation method of the operating device according to the embodiment of the present invention.
FIG. 7B is a diagram illustrating the operation method of the operating device according to the embodiment of the present invention.
FIG. 7C is a diagram illustrating the operation method of the operating device according to the embodiment of the present invention.
FIG. 7D is a diagram illustrating the operation method of the operating device according to the embodiment of the present invention.
FIG. 8A is a diagram illustrating a generating method of a target route of the work vehicle according to the embodiment of the present invention.
FIG. 8B is a diagram illustrating the generating method of the target route of the work vehicle according to the embodiment of the present invention.
FIG. 9 is a flowchart illustrating an example of a procedure of travel control processing executed in the work vehicle according to the embodiment of the present invention.
FIG. 10 is a diagram illustrating another generating method of the target route of the work vehicle according to the embodiment of the present invention.
FIG. 11 is a diagram illustrating another generating method of the target route of the work vehicle according to the embodiment of the present invention.

### DESCRIPTION OF EMBODIMENTS

The following embodiments are embodied examples of the present invention and are not intended to limit the technical scope of the present invention.

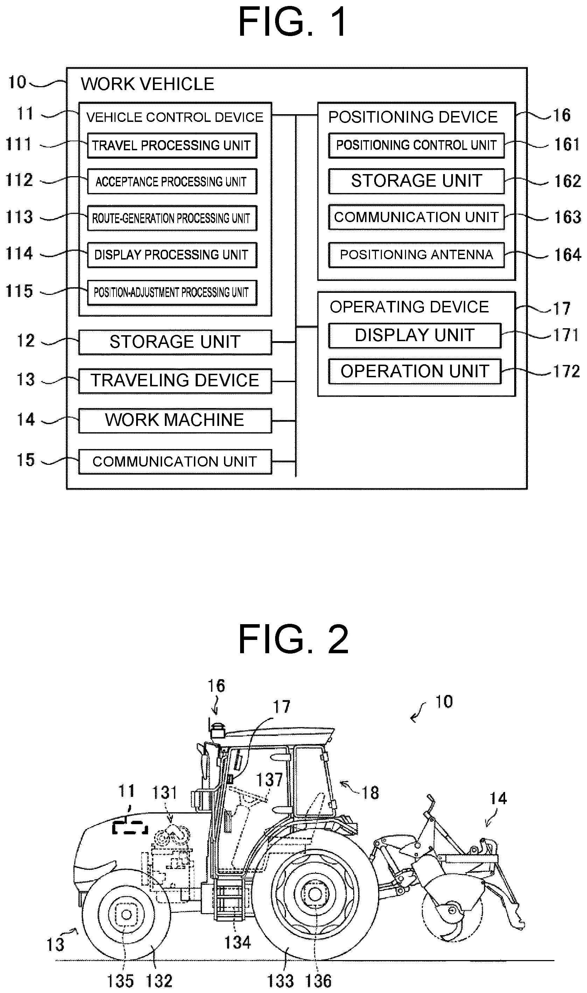

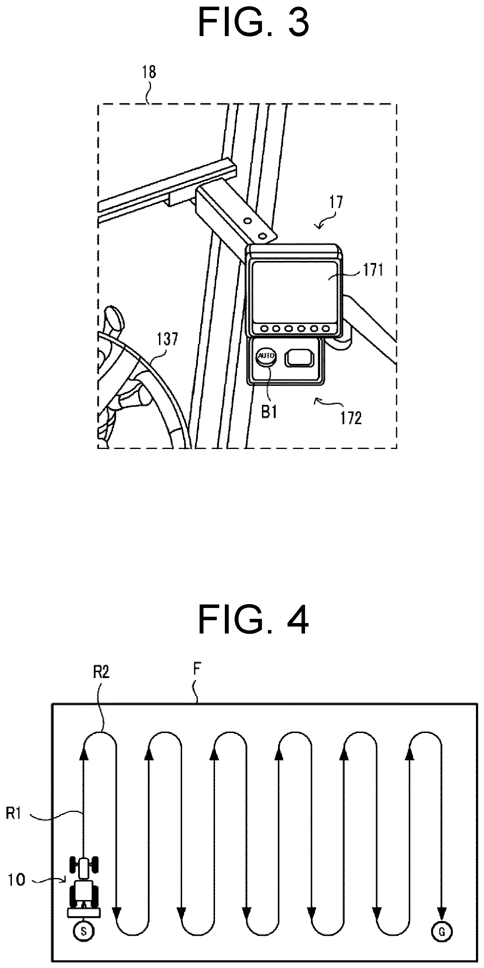

As shown in FIG. 1 and FIG. 2, the travel control system according to an embodiment of the present invention includes a work vehicle 10, a base station (not shown), and a satellite (not shown). In this embodiment, a case in which the work vehicle 10 is a tractor will be described as an example. As another embodiment, the work vehicle 10 may be a rice transplanter, a combine harvester, a construction machine, a snowplow or the like. The work vehicle 10 performs a predetermined work (cultivating work, for example) while traveling from a work start position S to a work end position G in a field F (see FIG. 4) in response to the operator's operation. Specifically, the work vehicle 10 automatically travels on a straight route R1, which is a target route in response to an automatic travel operation by the operator and manually travels on a turning route R2 in response to a manual travel operation (driving operation) by the operator. The work vehicle 10 travels in the field F and performs the work, while repeating the automatic travel on the straight route R1 and the manual travel on the turning route R2. Note that the target route is the route that the work vehicle 10 travels automatically, and is generated in advance on the basis of the operator's operation. In this embodiment, the straight route R1 corresponds to the target route.

In this embodiment, the case in which the work vehicle 10 travels automatically when traveling straight ahead is taken as an example, but the work vehicle 10 may also travel automatically when traveling in a turn. When the work vehicle 10 travels automatically when turning, the turning route R2 corresponds to the target route. In other words, the work vehicle of the present invention includes a configuration of traveling by switching between a function of automatic travel on the target route and a function of manual travel in response to the operator's manual travel operation.

In the field F shown in FIG. 4, for example, the work vehicle 10 travels from the work start position S to the work end position G by repeating the straight route R1, the turning route R2, the straight route R1, the turning route R2, ... in sequence. Each of the plurality of straight routes R1 is substantially parallel to each other. The travel route including the straight route R1 and the turning route R2 shown in FIG. 4 is an example, and the travel route is determined as appropriate in accordance with a size of the work vehicle 10, a size of a work machine 14, contents of the work, a shape of the field F and the like.

Note that the travel control system may include an operation terminal (tablet terminal, smartphone and the like) operated by the operator. The operation terminal can communicate with the work vehicle 10 via a communication network such as a cellular phone network, a packet line network, a wireless LAN or the like. For example, the operator performs an operation of registering various types of information (work vehicle information, field information, work information and the like) in the operation terminal. In addition, the operator can grasp the travel and work conditions of the work vehicle 10 and the like at a distance from the work vehicle 10 by a traveling trajectory displayed on the operation terminal.

### Work Vehicle 10

As shown in FIG. 1 and FIG. 2, the work vehicle 10 has a vehicle control device 11, a storage unit 12, traveling device 13, a work machine 14, a communication unit 15, a positioning device 16, an operating device 17 and the like. The vehicle control device 11 is electrically connected to the storage unit 12, the traveling device 13, the work machine 14, the positioning device 16, the operating device 17 and the like. Note that the vehicle control device 11 and the positioning device 16 may be capable of wireless communication. Furthermore, the vehicle control device 11 and the operating device 17 may be capable of wireless communication.

The communication unit 15 is a communication interface for connecting the work vehicle 10 to a communication network by wire or wirelessly and for executing data communication in accordance with a predetermined communication protocol with external equipment (operation terminal or the like) via the communication network.

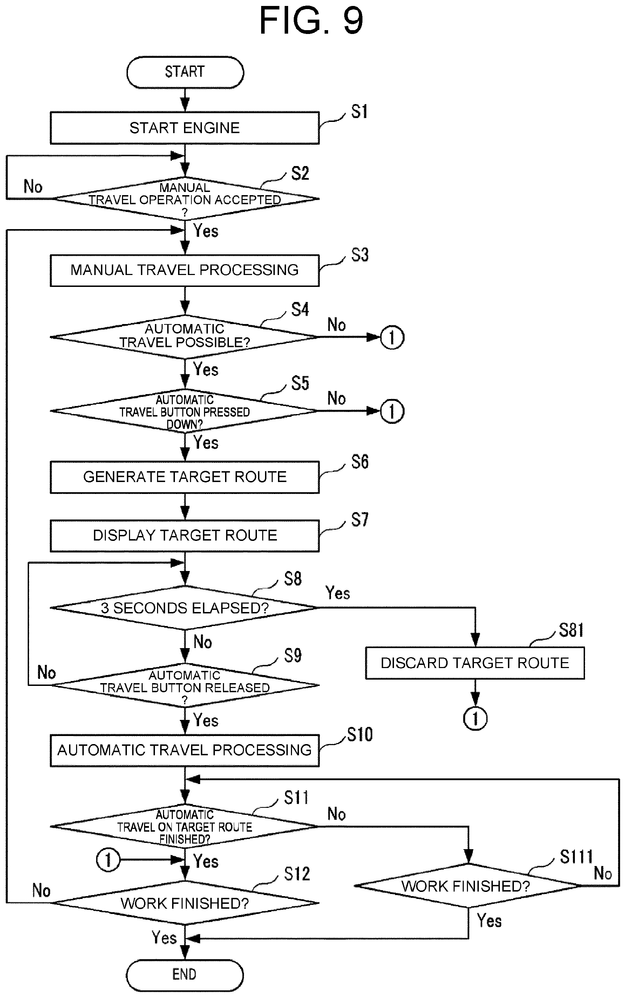

The storage unit 12 is a non-volatile storage unit such as a hard disk drive (HDD) or a solid state drive (SSD) that stores various types of information. The storage unit 12 stores control programs such as travel control program for causing the vehicle control device 11 to execute travel control processing which will be described later (see FIG. 9). For example, the travel control program is non-transiently recorded in a computer-readable recording medium, such as a CD or a DVD, and is read by a predetermined reading device (not shown) to be stored in the storage unit 12. Note that the travel control program may be downloaded from a server (not shown) to the work vehicle 10 via the communication network and stored in the storage unit 12.

The traveling device 13 is a driving unit that causes the work vehicle 10 to travel. As shown in FIG. 2, the traveling device 13 includes an engine 131, front wheels 132, rear wheels 133, a transmission 134, a front axle 135, a rear axle 136, a steering wheel 137 and the like. Note that the front wheel 132 and the rear wheel 133 are provided each on the left and right sides of the work vehicle 10. Moreover, the traveling device 13 is not limited to a wheel type including the front wheel 132 and the rear wheel 133 but may also be a crawler type including crawlers provided on the left and right sides of the work vehicle 10.

The engine 131 is a drive source such as a diesel engine or a gasoline engine driven by fuel supplied to a fuel tank, not shown. The traveling device 13, together with the engine 131 or instead of the engine 131, may include an electric motor as a drive source. Note that, to the engine 131, a generator, not shown, is connected, and the generator supplies power to electric components such as the vehicle control device 11 and batteries and the like provided in the work vehicle 10. Note that the battery is charged by the power supplied from the generator. Then, the electric components such as the vehicle control device 11, the positioning device 16, the operating device 17 and the like provided on the work vehicle 10 can be driven by the electric power supplied from the battery even after the engine 131 is stopped.

A driving force of the engine 131 is transmitted to the front wheels 132 through the transmission 134 and the front axle 135 and is transmitted to the rear wheels 133 via the transmission 134 and the rear axle 136. Moreover, the driving force of the engine 131 is transmitted also to the work machine 14 via a PTO shaft (not shown). The traveling device 13 performs travel operations in accordance with instructions of the vehicle control device 11.

The work machine 14 is, for example, a cultivator, a seeder, a mower, a plow, a fertilizer applicator or the like, which can be removably attached to the work vehicle 10. As a result, the work vehicle 10 can perform various works by using each of the work machines 14. FIG. 2 shows a case where the work machine 14 is a cultivator.

The steering wheel 137 is an operation unit operated by the operator or the vehicle control device 11. For example, the traveling device 13 changes an angle of the front wheels 132 in response to the operation of the steering wheel 137 by the vehicle control device 11 by a hydraulic power steering mechanism (not shown) or the like and changes an advancing direction of the work vehicle 10.

In addition to the steering wheel 137, the traveling device 13 includes a shift lever, an accelerator, a brake and the like, not shown, operated by the vehicle control device 11. Then, the traveling device 13 switches a gear of the transmission 134 to a forward gear or a backward gear or the like in accordance with the operation of the shift lever by the vehicle control device 11 and switches a travel mode of the work vehicle 10 to forward, backward or the like. Moreover, the traveling device 13 controls a rotation number of the engine 131 in response to the operation of the accelerator by the vehicle control device 11. In addition, the traveling device 13 uses electromagnetic brakes in response to the braking operation by the vehicle control device 11 so as to brake rotation of the front wheels 132 and the rear wheels 133.

The positioning device 16 is a communication device including a positioning control unit 161, a storage unit 162, a communication unit 163, a positioning antenna 164 and the like. For example, the positioning device 16 is provided above a cabin 18 on which the operator boards, as shown in FIG. 2. Moreover, an installation location of the positioning device 16 is not limited to the cabin 18. Furthermore, the positioning control unit 161, the storage unit 162, the communication unit 163, and the positioning antenna 164 of the positioning device 16 may be disposed at different positions in a distributed manner in the work vehicle 10. Note that the battery is connected to the positioning device 16 as described above, and the positioning device 16 can operate even while the engine 131 is stopped. Moreover, a cell phone terminal, a smart phone, a tablet terminal or the like may be substituted for the positioning device 16.

The positioning control unit 161 is a computer system including one or a plurality of processors and a storage memory such as a non-volatile memory and a RAM. The storage unit 162 is a non-volatile memory or the like that stores positioning control programs for causing the positioning control unit 161 to execute the positioning processing as well as data such as positioning information and movement information. For example, the positioning control program is non-transiently recorded in a computer-readable recording medium such as a CD or a DVD, which is read by a predetermined reading device (not shown) and is stored in the storage unit 162. Note that the positioning control program may be downloaded from a server (not shown) to the positioning device 16 via the communication network and stored in the storage unit 162.

The communication unit 163 is a communication interface for connecting the positioning device 16 to the communication network by wire or wirelessly and for executing data communication in accordance with a predetermined communication protocol with external devices such as a base station server via the communication network.

The positioning antenna 164 is an antenna which receives radio waves (GNSS signals) transmitted from satellites.

The positioning control unit 161 calculates the current position of the work vehicle 10 on the basis of the GNSS signals that the positioning antenna 164 receives from the satellite. For example, in a case where the work vehicle 10 automatically travels in the field F, when the positioning antenna 164 receives radio waves (such as transmission time, orbital information and the like) transmitted from each of the multiple satellites, the positioning control unit 161 calculates a distance between the positioning antenna 164 and each satellite and calculates a current position (latitude and longitude) of the work vehicle 10 on the basis of the calculated distance. Alternatively, the positioning control unit 161 may perform positioning by a real-time kinematic method (RTK-GPS positioning method (RTK method)) which calculates the current position of the work vehicle 10 using correction information corresponding to the base station (reference station) near the work vehicle 10. As described above, the work vehicle 10 performs the automatic travel by using the RTK-method based positioning information. Note that the current position of the work vehicle 10 may be the same as the positioning position (the position of the positioning antenna 164, for example) or it may be a position deviated from the positioning position.

The operating device 17 is a device operated by an operator onboard the work vehicle 10 and includes a display unit 171 that displays various types of information and an operation unit 172 that accepts the operator's operations. For example, as shown in FIG. 2 and FIG. 3, the operating device 17 is installed in the vicinity of the steering wheel 137 in the cabin 18. Note that the display unit 171 and the operation unit 172 may be installed at positions different from each other. For example, the operation unit 172 may be installed on the steering wheel 137. Alternatively, the display unit 171 and the operation unit 172 may be constituted by an integrated touch panel. That is, the operation unit 172 may be constituted by a physical button whose shape is changed in response to the operator's operation, or it may be constituted by an electronic button image that is displayed on the display unit 171. Alternatively, the operating device 17 may be an operation terminal (tablet terminal, smartphone and the like) that can be carried by the operator.

The operation unit 172 includes an automatic travel button B1 (see FIG. 3), which is pressed down by the operator when the work vehicle 10 is to travel automatically. In other words, the automatic travel button B1 has a function as a switch button (automatic travel instruction button) for switching the travel mode of the work vehicle 10 from the manual travel (manual travel mode) to the automatic travel (automatic travel mode). The automatic travel button B1 is an example of the operation unit and an operation button of the present invention. A specific operation method of the automatic travel button B1 will be described later.

The vehicle control device 11 includes control equipment such as a CPU, a ROM, and a RAM. The CPU is a processor that executes various types of arithmetic processing. The ROM is a non-volatile storage unit in which control programs, such as a BIOS and an OS for causing the CPU to execute the various types of arithmetic processing, are stored in advance. The RAM is a volatile or non-volatile storage unit that stores various types of information and is used as a transient storage memory (work area) for the various types of processing to be executed by the CPU. Further, the vehicle control device 11 controls the work vehicle 10 by causing the CPU to execute the various types of control programs stored in advance in the ROM or the storage unit 12.

As shown in FIG. 1, the vehicle control device 11 includes various processing units such as a travel processing unit 111, an acceptance processing unit 112, a route-generation processing unit 113, a display processing unit 114, a position-adjustment processing unit 115 and the like. The travel processing unit 111 is an example of a first travel processing unit and a second travel processing unit of the present invention.
The route-generation processing unit 113 is an example of a route-generation processing unit of the present invention. Note that the vehicle control device 11 functions as a the various processing units by executing various types of processing in accordance with the travel control program by the CPU. Further, a part or all of the processing units may be configured by electronic circuits. Note that the travel control programs may be programs that cause the plurality of processors to function as the processing units.

The travel processing unit 111 controls travel of the work vehicle 10. Specifically, when the travel mode of the work vehicle 10 is the manual travel, the travel processing unit 111 causes the work vehicle 10 to travel manually on the basis of the operator's operation (manual travel operation). For example, when the travel processing unit 111 acquires operation information corresponding to manual travel operations (driving operations) such as a steering wheel operation, a shift operation, an accelerator operation, a braking operation and the like by the operator, it causes the traveling device 13 to execute a travel operation on the basis of the operation information.

Moreover, when the travel mode of the work vehicle 10 is the automatic travel, the travel processing unit 111 causes the work vehicle 10 to travel automatically on the basis of position information (positioning information) indicating a current position of the work vehicle 10 that is positioned by the positioning control unit 161. For example, when the work vehicle 10 satisfies an automatic-travel start condition and acquires an automatic-travel start instruction from the operator, the travel processing unit 111 starts the automatic travel of the work vehicle 10 on the basis of the positioning information. Moreover, the travel processing unit 111 causes the work vehicle 10 to travel automatically along a pre-generated target route.

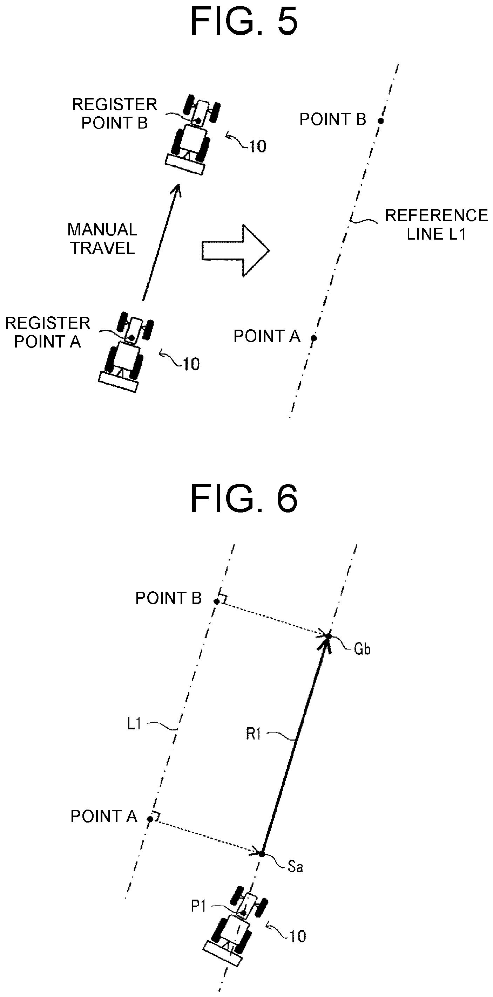

Here, specific examples of the automatic travel according to this embodiment will be described with reference to FIG. 5 and FIG. 6. In this embodiment, in the field F shown in FIG. 4, the work vehicle 10 is caused to travel automatically on the straight route R1 among the travel routes. First, the operator sets the reference line L1 for generating the straight route R1, which is the target route. For example, at an arbitrary position in the field F (at an outer edge, for example), the operator causes the work vehicle 10 to travel manually in a direction (target direction) in which he or she wants the work vehicle 10 to travel and to work. Specifically, the operator manually travels the work vehicle 10 in the direction parallel to the working direction (a cultivating direction, for example) when the work vehicle 10 is working in a work area. Then, the operator operates (selects) the operation unit 172 twice at an arbitrary position when the work vehicle 10 is caused to travel manually in the intended target direction. The vehicle control device 11 registers the relevant operation position (point A) by the operator's first selection operation, and registers the relevant operation position (point B) by the operator's second selection operation. When the vehicle control device 11 acquires the position information of the point A and the point B, it sets a straight line passing the point A and the point B as the reference line L1 (see FIG. 5). The vehicle control device 11 registers the reference line L1 in the storage unit 12. The registration processing of the reference line L1 is executed in advance before the work vehicle 10 starts working. After the reference line L1 is registered, the work vehicle 10 starts working in the field F.

For example, when the work vehicle 10 is caused to travel straight ahead in the field F, the operator operates the operation unit 172 so as to switch the travel mode from the manual travel to the automatic travel. When the travel mode is switched to the automatic travel, the vehicle control device 11 (route-generation processing unit 113) generates a target route (straight route R1) in parallel to the reference line L1 on the basis of the current position P1 of the work vehicle 10 (see FIG. 6). For example, the route-generation processing unit 113 generates a route (straight route R1) that passes through the current position P1 and connects an automatic-travel start position Sa corresponding to the point A on a straight line in parallel to the reference line L1 and an automatic-travel end position Gb corresponding to the point B as the target route.

Then, when the work vehicle 10 satisfies the automatic-travel start condition and acquires an automatic-travel start instruction from the operator, the travel processing unit 111 causes the work vehicle 10 to start automatic travel along the straight route R1. Note that the automatic-travel start condition includes such conditions that the current position P1 of the work vehicle 10 substantially coincides (including complete coincidence) with the automatic-travel start position Sa, an azimuth of the work vehicle 10 is within a predetermined azimuth and the like. As a result, the work vehicle 10 automatically travels along the straight route R1 (see FIG. 6) from the automatic-travel start position Sa to the automatic-travel end position Gb.

Moreover, when the work vehicle 10 reaches the automatic-travel end position Gb, the travel processing unit 111 switches the travel mode to the manual travel. When the travel mode is switched to the manual travel, the operator causes the work vehicle 10 to travel manually by the manual travel operation on the turning route R2, for example (see FIG. 4).

As described above, the travel processing unit 111 switches the travel mode in response to the operator's operation, causes the work vehicle 10 to travel automatically along the straight route R1 and to travel manually along the turning route R2.

Here, the acceptance processing unit 112 accepts an operation to switch the travel mode by the operator. Specifically, the acceptance processing unit 112 accepts the operation to switch the travel mode from the manual travel to the automatic travel via the operation of the operation unit 172 (automatic travel button B 1) by the operator.

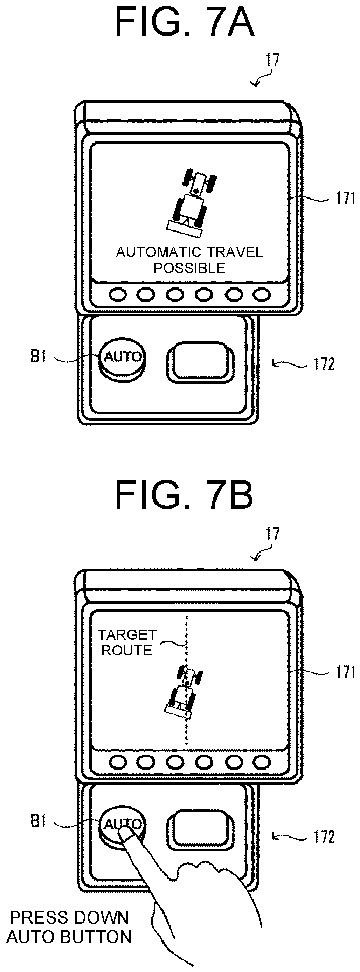

Next, the specific operating method of the automatic travel button B1 will be explained with reference to FIGS. 7A to 7D. FIGS. 7A to 7D show examples of a specific configuration and display screens of the operating device 17. As shown in FIG. 7A, the display processing unit 114 causes information indicating whether the automatic travel is possible or not to be displayed on the display unit 171. For example, if the work vehicle 10 satisfies the automatic-travel start condition, the display processing unit 114 causes a message indicating that the automatic travel is possible to be displayed on the display unit 171 (see FIG. 7A).

When the work vehicle 10 satisfies the automatic-travel start condition, the acceptance processing unit 112 enables acceptance of the automatic travel button B1. For example, as shown in FIG. 7B, when the operator presses down (selects) the automatic travel button B1 (AUTO button) with a finger, the acceptance processing unit 112 accepts the operation (selection operation). The operation of pressing down the automatic travel button B1 (selection operation) is an example of the first operation of the present invention.

When the acceptance processing unit 112 accepts the selection operation of the automatic travel button B1, the route-generation processing unit 113 generates, as a target route, a route (straight route R1 in FIG. 6) that passes through the current position P1 of the work vehicle 10 at the time the selection operation was accepted and that is parallel to the reference line L1 set in advance. In other words, the operation in which the operator presses down the automatic travel button B1 corresponds to a route-generation instruction operation (an example of the first operation of the present invention), and when the operator presses down the automatic travel button B1, the acceptance processing unit 112 accepts the route generation instruction. Moreover, the display processing unit 114 causes the target route generated by the route-generation processing unit 113 to be displayed on the display unit 171 (see FIG. 7B). Note that the display processing unit 114 may display the reference line L1 along with the target route on the display screen shown in FIG. 7B.

Specifically, the position-adjustment processing unit 115 sets a control center position (current position P1) of the work vehicle 10 to a position shifted by a predetermined set distance from the positioning position P0, which is the position of the positioning control unit 161 or the positioning antenna 164. The operator can set the control center position (current position P1) at an arbitrary position by setting the set distance. For example, the current position P1 is set to a front side of the work vehicle 10 from the positioning position P0. Alternatively, the current position P1 may be set to a rear side of the work vehicle 10 from the positioning position P0 (a position of the work machine 13, for example), or it may be set to a position shifted in a left/right direction from the center position in the left/right direction. Alternatively, the current position P1 may be set to the front side in the advancing direction from a vehicle body of the work vehicle 10. Alternatively, the current position P1 may be the same as the positioning position P0.

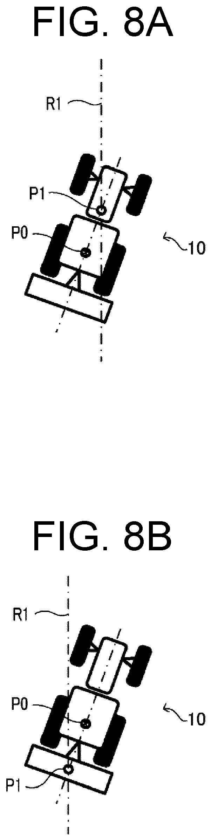

The route-generation processing unit 113 generates a target route with the current position P1 (control center position) of the work vehicle 10 set by the position-adjustment processing unit 115 as a reference. As shown in FIG. 8A and FIG. 8B, the target route is generated on the basis of the position shifted from the positioning position P0 of the work vehicle 10 by a predetermined set distance. For example, as shown in FIG. 8A, the route-generation processing unit 113 generates the target route on the basis of the current position P1 set to the front side of the work vehicle 10 from the positioning position P0 as the reference. Moreover, for example, as shown in FIG. 8B, the route-generation processing unit 113 generates the target route on the basis of the current position P1 set to the rear side of the work vehicle 10 from the positioning position P0 (the position of the work machine 13, for example) as the reference.

By generating the target route for the work vehicle 10 on the basis of the position (current position P1) shifted to an arbitrary position from the positioning position P0, the operator can cause the work vehicle 10 to travel automatically with the arbitrary position as the reference. For example, by generating the target route for the work vehicle 10 on the basis of the current position P1 shifted to the front side from the positioning position P0 (see FIG. 8A), the operator can cause the work vehicle 10 to travel automatically with the position of a hood on the front of the work vehicle 10 as the reference, for example. Moreover, by generating the target route for the work vehicle 10 on the basis of the current position P1 shifted to the rear side from the positioning position P0 (see FIG. 8B), the operator can cause the work vehicle 10 to travel automatically with the position of the work machine 13 as the reference, for example.

Furthermore, in order to prevent malfunctions due to chattering of the automatic travel button B1, the acceptance processing unit 112 may accept the operation (route-generation instruction operation) when a certain period of time (0.2 seconds, for example) has elapsed in a state where the automatic travel button B1 is pressed down.

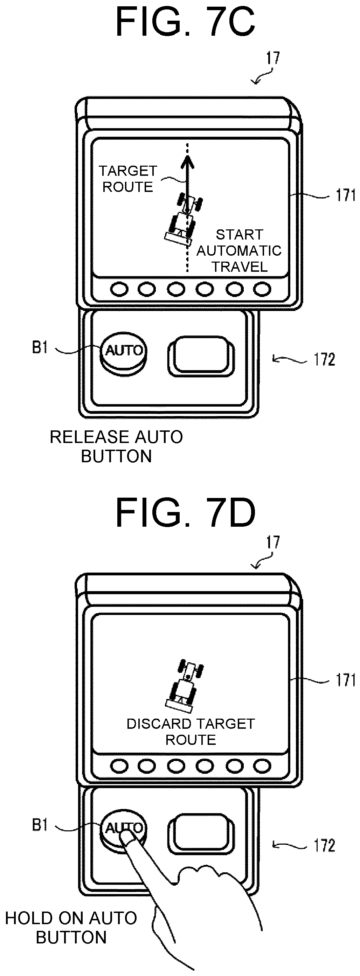

If the operator presses down the automatic travel button B1 with his/her finger and then, the operator releases the finger from the automatic travel button B1 before a predetermined time (3 seconds, for example) has elapsed (within the predetermined time) since he/she pressed down the automatic travel button B1 with the finger (see FIG. 7C), the acceptance processing unit 112 accepts the operation (release operation). The operation of releasing the automatic travel button B1 before the predetermined time has elapsed after pressing down the automatic travel button B1 (release operation) is an example of the second operation of the present invention.

When the acceptance processing unit 112 accepts the release operation of the automatic travel button B1, the travel processing unit 111 causes the work vehicle 10 to start the automatic travel along the target route (straight route R1) (see FIG. 7C). In other words, the operation in which the operator releases the automatic travel button B1 before the predetermined time has elapsed corresponds to an automatic-travel start operation (or a travel-mode switching operation) (an example of the second operation of the present invention), and when the operator releases the automatic travel button B1 before the predetermined time elapses, the acceptance processing unit 112 accepts the automatic-travel start instruction, and the travel processing unit 111 switches the travel mode from the manual travel to the automatic travel and has the automatic travel started along the target route. Moreover, the display processing unit 114 causes a message indicating that the automatic travel is to be started and the advancing direction of the work vehicle 10 to be displayed on the display unit 171 (see FIG. 7C). As described above, the vehicle control device 11 switches the work vehicle 10 from the manual travel to the automatic travel when the automatic-travel start operation is accepted after the route-generation instruction operation. In addition, the vehicle control device 11 switches the work vehicle 10 from the manual travel to the automatic travel when the automatic-travel start operation is accepted before the predetermined time has elapsed since the route-generation instruction operation was accepted.

Here, if a predetermined time (3 seconds, for example) has elapsed in a state where the operator presses down the automatic travel button B1 with his/her finger (see FIG. 7D), that is, if the operator does not release the finger from the automatic travel button B1 until the predetermined time has elapsed since he/she pressed down the automatic travel button B1 with the finger, the acceptance processing unit 112 accepts the operation (holding-on operation). When the acceptance processing unit 112 accepts the holding-on operation of the automatic travel button B1, the route-generation processing unit 113 discards the generated target route (straight route R1) (see FIG. 7D). In other words, the operation of maintaining the state in which the operator presses down the automatic travel button B1 until the predetermined time has elapsed corresponds to a cancellation operation of cancelling the generated target route, and if the operator maintains the state in which the automatic travel button B1 is pressed down until the predetermined time has elapsed, the acceptance processing unit 112 accepts a cancellation instruction of the target route, and the route-generation processing unit 113 discards (cancels) the generated target route. Moreover, the display processing unit 114 causes a message indicating that the generated target route was discarded to be displayed on the display unit 171 (see FIG. 7D). In this case, the travel processing unit 111 maintains the manual travel of the work vehicle 10. As described above, if the vehicle control device 11 does not accept the automatic-travel start operation until the predetermined time has elapsed since the route-generation instruction operation was accepted, it maintains the manual travel of the work vehicle 10. Moreover, if the vehicle control device 11 does not accept the automatic-travel start operation until the predetermined time has elapsed since accepting the route-generation instruction operation was accepted, it discards the generated target route.

With the above operations, for example, when the operator wants the work vehicle 10 to travel automatically, the operator can generate and confirm the target route by pressing down the automatic travel button B1 (route-generation instruction operation). And if the generated target route is the intended route, the operator can then perform an operation of releasing the automatic travel button B1 before the predetermined time elapses (automatic-travel start operation) to cause the work vehicle 10 to start the automatic travel along the target route.

Moreover, if the generated target route is not the intended route, the operator can discard the target route by continuously pressing down the automatic travel button B1 for a predetermined period of time (cancellation operation), change the position of the work vehicle 10 and then, perform the operation of pressing down the automatic travel button B1 again (route-generation instruction operation) so that the target route can be generated again. Thus, the operator can reliably generate the intended target route and cause the work vehicle 10 to travel automatically along the intended target route.

While the work vehicle 10 is traveling (manual travel or automatic travel), the display processing unit 114 may display information such as the target route, a travel trajectory and the like on the display unit 171.

[Travel Control Processing] Hereinafter, with reference to FIG. 9, an example of the travel control processing executed by the vehicle control device 11 will be described. Note that the present invention may also be understood as an invention of a travel control method in which the vehicle control device 11 executes a part or the whole of the travel control processing or an invention of a travel control program for causing the vehicle control device 11 to execute a part or the whole of the travel control method. Moreover, one or a plurality of processors may execute the travel control processing.

First, at Step S1, the vehicle control device 11 starts the engine 131 of the work vehicle 10 in response to the engine start operation by the operator. When the engine 131 is started, the positioning control unit 161 executes azimuth recognition processing (initialization).

Next, at Step S2, the vehicle control device 11 determines whether the manual travel operation (driving operation) by the operator has been accepted. For example, the operator performs the steering wheel operation, the shift operation, the accelerator operation, the brake operation and the like in order to move the work vehicle 10 to the work start position S. If the vehicle control device 11 accepts the manual travel operation (S2: Yes), the processing proceeds to Step S3.

At Step S3, the vehicle control device 11 causes the work vehicle 10 to travel manually on the basis of the manual travel operation by the operator. Specifically, the vehicle control device 11 causes the traveling device 13 to execute the travel operation when it acquires operation information of the manual travel operation by the operator.

Next, at Step S4, the vehicle control device 11 determines whether the work vehicle 10 is ready for the automatic travel or not. For example, if such conditions for starting the automatic travel are satisfied that the current position P1 of the work vehicle 10 and the automatic-travel start position Sa substantially coincide (see FIG. 6), that the azimuth of the work vehicle 10 is within a predetermined azimuth and the like, the vehicle control device 11 determines that the work vehicle 10 is ready for the automatic travel. If the work vehicle 10 is ready for the automatic travel (S4: Yes), the processing proceeds to Step S5. On the other hand, If the work vehicle 10 is not ready for the automatic travel (S4: No), the processing proceeds to Step S12. While the work vehicle 10 is not ready for the automatic travel, the vehicle control device 11 repeats the manual travel in response to the operator's manual travel operation until the work is completed (S12: No).

Moreover, if the work vehicle 10 is ready for the automatic travel (S4: Yes), the vehicle control device 11 causes a message indicating that the automatic travel is possible to be displayed on the display unit 171 (see FIG. 7A). As a result, the operator can recognize that the work vehicle 10 is ready for the automatic travel.

At Step S5, the vehicle control device 11 determines whether the automatic travel button B1 was pressed down or not. For example, when the operator determines that he/she wants the work vehicle 10 to travel automatically, he/she presses down the automatic travel button B1 included in the operation unit 172 of the operating device 17 with a finger (see FIG. 7B).
If the automatic travel button B1 is pressed down (S5: Yes), the processing proceeds to Step S6. On the other hand, if the automatic travel button B1 is not pressed down (S5: No), the processing proceeds to Step S12.

At Step S6, the vehicle control device 11 generates a target route, which is the route on which the work vehicle 10 travels automatically. Specifically, when the automatic travel button B1 is pressed down, the vehicle control device 11 accepts the route-generation instruction and generates a route passing through the current position P1 of the work vehicle 10 at the time the automatic travel button B1 was pressed down and parallel to the reference line L1 set in advance (straight route R1 in FIG. 6) as the target route. Note that the vehicle control device 11 may set the current position P1 (control center position) at the positioning position P0, which is the position of the positioning control unit 161 or the positioning antenna 164 or may set the current position P1 at a position shifted by a predetermined distance in any of the front/back or left/right directions from the positioning position P0.

Next, at Step S7, the vehicle control device 11 causes the generated target route to be displayed on the display unit 171 (FIG. 7B). As a result, the operator can recognize the route on which the work vehicle 10 can travel automatically. And the operator can easily determine whether the generated target route is the route intended by himself/herself or not.

Next, at Steps S8 and S9, the vehicle control device 11 determines whether the automatic travel button B1 was released (cancelled) or not before a predetermined time (3 seconds, for example) has elapsed since the automatic travel button B1 was pressed down. Specifically, if the operator releases the finger from the automatic travel button B1 before 3 seconds have elapsed since the operator pressed down the automatic travel button B1 (S8: No and S9: Yes), the processing proceeds to Step S10 (see FIG. 7C). On the other hand, if 3 seconds have elapsed in the state where the operator holds on the automatic travel button B1 with the finger (S8: Yes), the processing proceeds to Step S81 (see FIG. 7D).

For example, if the operator determines that the generated target route is the route intended by himself/herself, he/she releases the finger from the automatic travel button B1 within less than 3 seconds after pressing down the automatic travel button B1 (see FIG. 7C). On the other hand, if the operator determines that the generated target route is not the route intended by himself/herself, he/she maintains the pressing-down state of the automatic travel button B1 until 3 seconds have elapsed (see FIG. 7D).

At Step S81, the vehicle control device 11 discards the generated target route (see FIG. 7D). Specifically, when 3 seconds have elapsed since the operator pressed down the automatic travel button B1 with the finger, the vehicle control device 11 accepts the cancellation instruction of the target route and discards (cancels) the generated target route. Moreover, the vehicle control device 11 causes a message indicating that the generated target route was discarded to be displayed on the display unit 171 (see FIG. 7D). After Step S81, the processing proceeds to Step S12. In this case, for example, the vehicle control device 11 continues the manual travel and regenerates the target route on the basis of another route-generation instruction by the operator.

At Step S10, the vehicle control device 11 causes the work vehicle 10 to travel automatically along the generated target route. Specifically, if the operator releases the finger from the automatic travel button B1 before 3 seconds have elapsed since the operator pressed down the automatic travel button B1 with the finger, the vehicle control device 11 accepts the automatic-travel start instruction and switches the travel mode from the manual travel to the automatic travel and starts the automatic travel. For example, the vehicle control device 11 causes the work vehicle 10 to travel automatically on the straight route R1 (see FIG. 6) from the automatic-travel start position Sa to the automatic-travel end position Gb. Moreover, the vehicle control device 11 causes a message indicating that the automatic travel is to be started to be displayed on the display unit 171 (see FIG. 7C). As a result, the operator can recognize that the work vehicle 10 has started the automatic travel. After Step S10, the processing proceeds to Step S11.

At step S11, the vehicle control device 11 determines whether the work vehicle 10 has ended the automatic travel of the target route or not. For example, when the work vehicle 10 reaches the automatic-travel end position Gb (see FIG. 4) of the straight route R1, the vehicle control device 11 determines that the work vehicle 10 has ended the automatic travel on the target route. When the work vehicle 10 ends the automatic travel on the target route (S11: Yes), the processing proceeds to Step S12. On the other hand, if the work vehicle 10 has not ended the automatic travel on the target route (S11: No), the processing proceeds to Step S111.

When the work in the field F is ended while the work vehicle 10 is automatically traveling on the target route (S111: Yes), the vehicle control device 11 ends the travel control processing.

Moreover, at Step S12, the vehicle control device 11 determines whether the work vehicle 10 has ended the work or not. When the work vehicle 10 has ended the work (S12: Yes), the vehicle control device 11 ends the travel control processing. On the other hand, if the work vehicle 10 has not ended the work (S12: No), the processing returns to Step S3, and the vehicle control device 11 repeats the processing described above.

As described above, the vehicle control device 11 executes the travel control processing for the work vehicle 10.

As described above, regarding the work vehicle 10 according to this embodiment, the work vehicle 10 is caused to travel manually on the basis of the operator's manual travel operation, and when the work vehicle 10 accepts the operator's first operation (route-generation instruction operation) to the operation unit 172 while the work vehicle 10 is traveling manually, the target route, which is a route for the automatic travel of the work vehicle 10, is generated, and when the operator's second operation (automatic-travel start operation) to the operation unit 172 is accepted after the first operation, the work vehicle 10 is caused to travel automatically along the target route.

According to the above configuration, a target route for the automatic travel is generated by the operator performing the first operation. As a result, the operator can generate the intended target route. Moreover, the operator can cause the work vehicle 10 to travel automatically along the target route by executing the second operation following the first operation. As described above, the operator can confirm the target route before starting the automatic travel of the work vehicle 10 by a simple operation in the operation unit 172 and can start the automatic travel after the target route is confirmed. Thus, operability can be improved when the work vehicle 10 is caused to travel automatically.

Here, in the case of a configuration in which a target route is generated, and the automatic travel is started in a single session of the operation by the operator, there is a concern that such a problem occurs that the work vehicle 10 starts the automatic travel along the target route not intended by the operator. In this regard, since this embodiment is configured such that two steps of operation, that is, separating the operation into the operation of generating the target route (first operation) and the operation of starting the automatic travel (second operation) are required and thus, the aforementioned problem can be prevented.

### Other Embodiments

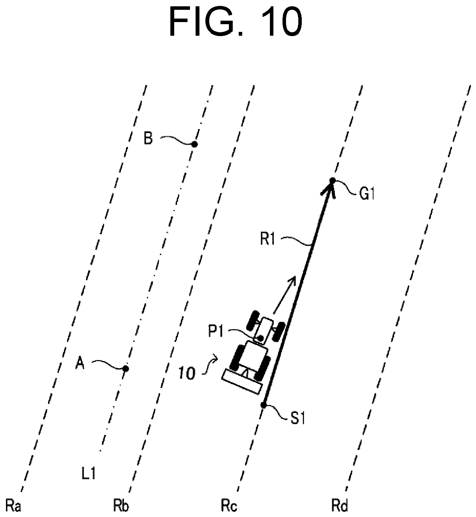

The present invention is not limited to the aforementioned embodiment but may be embodied in the following embodiments. For example, the route-generation processing unit 113 may pre-set a target route for the automatic travel. FIG. 10 shows straight routes Ra to Rd of the pre-set target routes. For example, the straight routes Ra to Rd are generated on the basis of setting information such as the reference line L1, a lateral width, a work width and the like of each of the work vehicle 10 and the work machine 14. The route-generation processing unit 113 generates, among the straight routes Ra to Rd, the straight route Rc, which is the closest to the current position P1 of the work vehicle 10 at the time the automatic travel button B1 is pressed down by the operator as the target route for the automatic travel. In this case, the work vehicle 10 automatically travels from the current position P1 toward the straight route Rc, and when it enters the straight route Rc, it automatically travels on the straight route Rc. Moreover, after the work vehicle 10 has automatically traveled on the straight route Rc, the route-generation processing unit 113 generates the straight route Rd as the next target route.

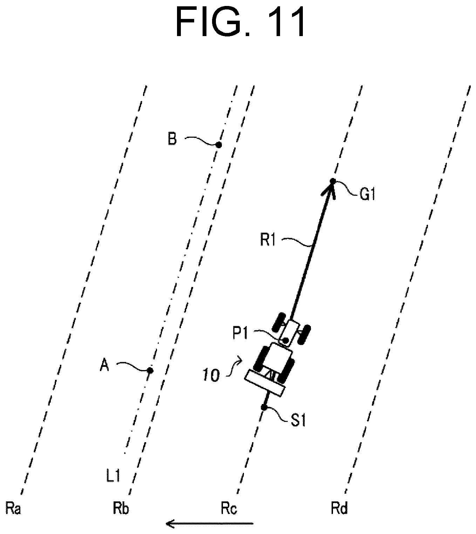

Moreover, as another embodiment, as shown in FIG. 11, the route-generation processing unit 113 may generate a target route for the automatic travel by moving all the straight routes Ra to Rd so as to overlap the current position P1 of the work vehicle 10 at the time the automatic travel button B1 is pressed down. In this case, as shown in FIG. 11, the route-generation processing unit 113 generates the straight route Rc which overlaps the current position P1 as the target route by moving all the straight routes Ra to Rd in a direction where the amount of movement of the straight routes Ra to Rd is the smallest (to the left in FIG. 11). In this case, the work vehicle 10 automatically travels on the straight route Rc from the current position P1.

The aforementioned embodiment has such a configuration that an operation in which the operator presses down the single operation unit 172 (automatic travel button B1) is accepted as the first operation (route-generation instruction operation) and an operation in which the operator releases (opens) the automatic travel button B1, which was pressed down by the operator, within the predetermined time is accepted as the second operation (automatic-travel start operation). In other words, the first operation and the second operation have operation contents different from each other.

As another embodiment of the present invention, the first operation and the second operation may be identical to each other. For example, a configuration may be such that the first operation in which the operator presses down and then, releases the automatic travel button B1 is accepted as the first operation (route-generation instruction operation) and after that, the second operation in which the operator presses down and then, releases the automatic travel button B1 within the predetermined time is accepted as the second operation (automatic-travel start operation).

Moreover, in the aforementioned embodiment, the operation unit that accepts the first operation (route-generation instruction operation) and the second operation (automatic-travel start operation) is constituted by the single operation unit 172 (automatic travel button B 1), but the present invention is not limited to this. As another embodiment, the operating device 17 may be configured by including a first operation button that accepts the route-generation instruction operation and a second operation button that accepts the automatic-travel start operation separately. In this case, if the operator presses down the first operation button while the work vehicle 10 is traveling manually, the route-generation processing unit 113 generates a target route for the automatic travel and then, if the operator presses down the second operation button before the predetermined time elapses, the travel processing unit 111 switches from the manual travel to the automatic travel and causes the work vehicle 10 to travel automatically along the target route.

Furthermore, the mode of the operation unit 172 is not limited to a finger-push type operation tool, but can also be a finger-pull type operation tool, a horizontal-sliding type operation tool or the like.

The travel control system according to the present invention is configured by at least the travel processing unit 111 and the route-generation processing unit 113 included in the vehicle control device 11. The travel control system may be mounted on the work vehicle 10 or outside of the work vehicle 10, such as on an operation terminal (tablet terminal, smartphone and the like), for example.

### REFERENCE SIGNS LIST

10 Work vehicle
11 Vehicle control device
12 Storage unit
13 Traveling device
14 Work machine
15 Communication unit
16 Positioning device
17 Operating device
111 Travel processing unit (first travel processing unit, second travel processing unit)
112 Acceptance processing unit
113 Route-generation processing unit
114 Display processing unit
171 Display unit
172 Operation unit
B1 Automatic travel button (operation button)
F Field
L1 Reference line
P0 Positioning position
P1 Current position
R1 Straight route (target route)

## Claims

1. A travel control method of executing steps of
causing a work vehicle (10) to travel manually on the basis of a manual travel operation by an operator,
generating a target route, which is a route for the work vehicle (10) to travel automatically, when a first operation by the operator to a button of an operation unit (172) is accepted while the work vehicle (10) is traveling manually, and
causing the work vehicle (10) to travel automatically along the target route when a second operation by the operator to said button of the operation unit (172) is accepted after the first operation.

2. The travel control method according to claim 1, wherein
when the second operation is accepted after the first operation, the work vehicle (10) is switched from manual travel to automatic travel.

3. The travel control method according to claim 2, wherein
the work vehicle (10) is switched from the manual travel to the automatic travel when the second operation is accepted before a predetermined time has elapsed since the first operation was accepted.

4. The travel control method of any one of claims 1 to 3, wherein
the manual travel of the work vehicle (10) is maintained if the second operation is not accepted until a predetermined time has elapsed since the first operation was accepted.

5. The travel control method according to any one of claims 1 to 4, wherein
the generated target route is discarded if the second operation is not accepted until a predetermined time has elapsed since the first operation was accepted.

6. The travel control method according to any one of claims 1 to 5, wherein
the first operation and the second operation are operations by the operator to the operation unit (172).

7. The travel control method according to any one of claims 1 to 6, wherein
the first operation is a selection operation by the operator on a selection button, which is the operation unit (172), and the second operation is a release operation by the operator on the selection button.

8. The travel control method according to any one of claims 1 to 7, wherein
the target route is generated on the basis of a current position (P1) of the work vehicle (10) at the time when the first operation is accepted.

9. The travel control method according to claim 8, wherein
the current position (P1) of the work vehicle (10) used to generate the target route is defined as a position shifted by a set distance set in advance from a positioning position (P0) of a positioning control unit (161) or antenna (16) of the work vehicle (10); and
a route which passes through the current position (P1) at the time when the first operation was accepted and is parallel to a reference line set in advance is generated as the target route.

10. The travel control method according to any one of claims 1 to 9, wherein
when the first operation is accepted, the target route is generated, and the generated target route is displayed on a display unit.

11. A travel control system comprising:
a first travel processing unit (111) which is arranged to cause a work vehicle (10) to travel manually on the basis of a manual travel operation by an operator;
a route-generation processing unit (113) which is arranged to generate a route for the work vehicle (10) to travel automatically if a first operation by the operator to a button of an operation unit (172) is accepted while the work vehicle (10) is traveling manually; and
a second travel processing unit (111) which is arranged to cause the work vehicle (10) to travel automatically along the target route when a second operation by the operator to said button of the operation unit (172) is accepted after the first operation.

12. A travel control program for having one or a plurality of processors to execute steps of:
causing a work vehicle (10) to travel manually on the basis of a manual travel operation by an operator;
generating a target route, which is a route for the work vehicle (10) to travel automatically, when a first operation by the operator to a button of an operation unit (172) is accepted while the work vehicle (10) is traveling manually; and
causing the work vehicle (10) to travel automatically along the target route when a second operation by the operator to said button of the operation unit (172) is accepted after the first operation.

## Patentansprüche

1. Fahrsteuerungsverfahren zum Ausführen der folgenden Schritte
Veranlassen eines Arbeitsfahrzeugs (10), basierend auf einer manuellen Fahrbedienung durch einen Bediener manuell zu fahren,
Erzeugen einer Zielroute, die eine Route für das Arbeitsfahrzeug (10) zum automatischen Fahren ist, wenn eine erste Bedienung durch den Bediener auf einem Knopf einer Bedienungseinheit (172) angenommen wird, wenn das Arbeitsfahrzeug (10) manuell fährt, und
Veranlassen des Arbeitsfahrzeugs (10), automatisch entlang der Zielroute zu fahren, wenn eine zweite Bedienung durch den Bediener auf dem Knopf der Bedienungseinheit (172) nach der ersten Bedienung angenommen wird.

2. Fahrsteuerungsverfahren nach Anspruch 1, wobei
wenn die zweite Bedienung nach der ersten Bedienung angenommen wird, das Arbeitsfahrzeug (10) vom manuellen Fahren auf automatisches Fahren geschaltet wird.

3. Fahrsteuerungsverfahren nach Anspruch 2, wobei
das Arbeitsfahrzeug (10) vom manuellen Fahren zum automatischen Fahren geschaltet wird, wenn die zweite Bedienung angenommen wird, bevor eine vorbestimmte Zeit verstrichen ist, seit die erste Bedienung angenommen wurde.

4. Fahrsteuerungsverfahren nach einem der Ansprüche 1 bis 3, wobei
das manuelle Fahren des Arbeitsfahrzeugs (10) beibehalten wird, wenn die zweite Bedienung nicht angenommen wurde, bis eine vorbestimmte Zeit verstrichen ist, seit die erste Bedienung angenommen wurde.

5. Fahrsteuerungsverfahren nach einem der Ansprüche 1 bis 4, wobei
die erzeugte Zielroute verworfen wird, wenn die zweite Bedienung nicht angenommen wird, bis eine vorbestimmte Zeit verstrichen ist, seit die erste Bedienung angenommen wurde.

6. Fahrsteuerungsverfahren nach einem der Ansprüche 1 bis 5, wobei
die erste Bedienung und die zweite Bedienung Bedienungen durch den Bediener auf der Bedienungseinheit (172) sind.

7. Fahrsteuerungsverfahren nach einem der Ansprüche 1 bis 6, wobei
die erste Bedienung eine Auswahlbedienung durch den Bediener auf einem Auswahlknopf ist, der die Bedienungseinheit (172) ist, und die zweite Bedienung eine Loslassbedienung durch den Bediener auf dem Auswahlknopf ist.

8. Fahrsteuerungsverfahren nach einem der Ansprüche 1 bis 7, wobei
die Zielroute basierend auf einer gegenwärtigen Position (P1) des Arbeitsfahrzeugs (10) an dem Zeitpunkt erzeugt wird, an dem die erste Bedienung angenommen wird.

9. Fahrsteuerungsverfahren nach Anspruch 8, wobei
die gegenwärtige Position (P1) des Arbeitsfahrzeugs (10), die zum Erzeugen der Zielroute verwendet wird, als eine Position definiert wird, die um einen im Voraus eingestellten eingestellten Abstand von einer Positionierungsposition (P0) einer Positionierungssteuerungseinheit (161) oder Antenne (16) des Arbeitsfahrzeugs (10) verschoben wird; und
eine Route, die an dem Zeitpunkt, an dem die erste Bedienung angenommen wurde, durch die gegenwärtige Position (P1) verläuft und parallel zu einer im Voraus eingestellten Bezugslinie ist, als die Zielroute erzeugt wird.

10. Fahrsteuerungsverfahren nach einem der Ansprüche 1 bis 9, wobei
wenn die erste Bedienung angenommen wird, die Zielroute erzeugt wird und die erzeugte Zielroute auf einer Anzeigeeinheit angezeigt wird.

11. Fahrzeugsteuerungssystem, umfassend:
eine erste Fahrverarbeitungseinheit (111), die eingerichtet ist, um ein Arbeitsfahrzeug (10) zu veranlassen, basierend auf einer manuellen Fahrbedienung durch einen Bediener manuell zu fahren;
eine Routenerzeugungsverarbeitungseinheit (113), die eingerichtet ist, um eine Route für das Arbeitsfahrzeug (10) zum automatischen Fahren zu erzeugen, wenn eine erste Bedienung durch den Bediener auf einem Knopf einer Bedienungseinheit (172) angenommen wird, während das Arbeitsfahrzeug (10) manuell fährt; und
eine zweite Fahrverarbeitungseinheit (111), die eingerichtet ist, um das Arbeitsfahrzeug (10) zu veranlassen, automatisch entlang der Zielroute zu fahren, wenn eine zweite Bedienung durch den Bediener auf dem Knopf der Bedienungseinheit (172) nach der ersten Bedienung angenommen wird.

12. Fahrsteuerungsprogramm, das einen oder eine Vielzahl von Prozessoren zum Ausführen der folgenden Schritte aufweist:
Veranlassen des Arbeitsfahrzeugs (10), basierend auf einer manuellen Fahrbedienung durch einen Bediener manuell zu fahren;
Erzeugen einer Zielroute, die eine Route für das Arbeitsfahrzeug (10) zum automatischen Fahren ist, wenn eine erste Bedienung durch den Bediener auf einem Knopf einer Bedienungseinheit (172) angenommen wird, während das Arbeitsfahrzeug (10) manuell fährt; und
Veranlassen des Arbeitsfahrzeugs (10), automatisch entlang der Zielroute zu fahren, wenn eine zweite Bedienung durch den Bediener auf dem Knopf der Bedienungseinheit (172) nach der ersten Bedienung angenommen wird.

## Revendications

1. Procédé de commande de déplacement pour exécuter les étapes suivantes
amener un véhicule de travail (10) à se déplacer manuellement sur la base d'une opération de déplacement manuel effectuée par un opérateur,
générer un itinéraire cible, qui est un itinéraire que le véhicule de travail (10) doit parcourir automatiquement, lorsqu'une première opération effectuée par l'opérateur sur un bouton d'une unité d'opération (172) est acceptée pendant que le véhicule de travail (10) se déplace manuellement, et
amener le véhicule de travail (10) à se déplacer automatiquement le long de l'itinéraire cible lorsqu'une deuxième opération effectuée par l'opérateur sur ledit bouton de l'unité d'opération (172) est acceptée après la première opération.

2. Procédé de commande de déplacement selon la revendication 1, dans lequel
lorsque la deuxième opération est acceptée après la première opération, le véhicule de travail (10) passe d'un déplacement manuel à un déplacement automatique.

3. Procédé de commande de déplacement selon la revendication 2, dans lequel
le véhicule de travail (10) passe du déplacement manuel au déplacement automatique lorsque la deuxième opération est acceptée avant qu'un temps prédéterminé ne se soit écoulé depuis l'acceptation de la première opération.

4. Procédé de commande de déplacement selon l'une des revendications 1 à 3, dans lequel
le déplacement manuel du véhicule de travail (10) est maintenu si la deuxième opération n'est pas acceptée jusqu'à ce qu'un temps prédéterminé se soit écoulé depuis l'acceptation de la première opération.

5. Procédé de commande de déplacement selon l'une des revendications 1 à 4, dans lequel
l'itinéraire cible généré est rejeté si la deuxième opération n'est pas acceptée jusqu'à ce qu'un temps prédéterminé se soit écoulé depuis l'acceptation de la première opération.

6. Procédé de commande de déplacement selon l'une des revendications 1 à 5, dans lequel
la première opération et la deuxième opération sont des opérations effectuées par l'opérateur sur l'unité d'opération (172).

7. Procédé de commande de déplacement selon l'une des revendications 1 à 6, dans lequel
la première opération est une opération de sélection effectuée par l'opérateur sur un bouton de sélection, qui est l'unité d'opération (172), et la deuxième opération est une opération de libération effectuée par l'opérateur sur le bouton de sélection.

8. Procédé de commande de déplacement selon l'une des revendications 1 à 7, dans lequel
l'itinéraire cible est généré sur la base d'une position actuelle (P1) du véhicule de travail (10) au temps de l'acceptation de la première opération.

9. Procédé de commande de déplacement selon la revendication 8, dans lequel
la position actuelle (P1) du véhicule de travail (10) utilisée pour générer l'itinéraire cible est définie comme une position décalée d'une distance réglée qui est réglée à l'avance par rapport à une position de positionnement (P0) d'une unité de commande de positionnement (161) ou d'une antenne (16) du véhicule de travail (10) ; et
un itinéraire qui passe par la position actuelle (P1) au temps de l'acceptation de la première opération et qui est parallèle à une ligne de référence réglée à l'avance est généré comme itinéraire cible.

10. Procédé de commande de déplacement selon l'une des revendications 1 à 9, dans lequel
lorsque la première opération est acceptée, l'itinéraire cible est généré, et l'itinéraire cible généré est affiché sur une unité d'affichage.

11. Système commande de déplacement comprenant :
une première unité de traitement de déplacement (111) qui est agencée pour amener un véhicule de travail (10) à se déplacer manuellement sur la base d'une opération de déplacement manuel effectuée par un opérateur ;
une unité de traitement de génération d'itinéraire (113) qui est agencée pour générer un itinéraire pour que le véhicule de travail (10) se déplace automatiquement si une première opération effectuée par l'opérateur sur un bouton d'une unité d'opération (172) est acceptée pendant que le véhicule de travail (10) se déplace manuellement ; et
une deuxième unité de traitement de déplacement (111) qui est agencée pour amener le véhicule de travail (10) à se déplacer automatiquement le long de l'itinéraire cible lorsqu'une deuxième opération effectuée par l'opérateur sur ledit bouton de l'unité d'opération (172) est acceptée après la première opération.

12. Programme de commande de déplacement pour faire en sorte qu'un ou plusieurs processeurs exécutent les étapes suivantes :
amener un véhicule de travail (10) à se déplacer manuellement sur la base d'une opération de déplacement manuel effectuée par un opérateur ;
générer un itinéraire cible, qui est un itinéraire que le véhicule de travail (10) doit parcourir automatiquement, lorsqu'une première opération effectuée par l'opérateur sur un bouton d'une unité d'opération (172) est acceptée pendant que le véhicule de travail (10) se déplace manuellement ; et
amener le véhicule de travail (10) à se déplacer automatiquement le long de l'itinéraire cible lorsqu'une deuxième opération effectuée par l'opérateur sur ledit bouton de l'unité d'opération (172) est acceptée après la première opération.
